# EUROPEAN PATENT SPECIFICATION

(11) **EP 0 691 896 B1**
(45) Date of publication and mention of the grant of the patent: **20.05.1998**
(21) Application number: 92924963.9
(22) Date of filing: 03.11.1992
(51) Int. Cl.: B23B 9/04, B23B 31/40

(54) **MACHINE SPINDLE OR TOOL HOLDER HAVING AN INTEGRATED CHUCK AND METHOD OF MANUFACTURING SAME**
MASCHINENSPINDEL ODER WERKZEUGHALTER MIT EINEM INTEGRIERTEN FUTTER UND METHODE ZUM HERSTELLEN DESSELBEN
BROCHE DE MACHINE OU PORTE-OUTILS A MANDRIN INTEGRE ET PROCEDE POUR SA FABRICATION

(30) Priority: 29.11.1991 SE 9103550
(43) Date of publication of application: 17.01.1996
(73) Proprietor: ETP TRANSMISSION AB, 581 11 Linköping (SE)
(72) Inventor: SAMELIUS, Anders, S-581 11 Linköping (SE)
(74) Representative: Avellan-Hultman, Olle
(86) International application number: SE9200757
(87) International publication number: WO9310928

(56) References cited:
- DE-C- 846 948
- US-A- 3 072 416
- US-A- 4 766 788
- PATENT ABSTRACTS OF JAPAN, Vol. 12, No. 218, M-711; & JP,A,63 016 906 (SHINKU
- PATENT ABSTRACTS OF JAPAN, Vol. 11, No. 228, M-610; & JP,A,62 044 301 (MITSUBISHI HEAVY IND LTD), 26 February 1987 (26.02.87).

## Description

The present invention relates to a rotatable holder for tools and work pieces according to the preamble of claim 1 and as known from US-A-3 072 416. The present invention generally relates to a machine spindle or a tool holder for any kinds of machine tools having a clamping device for tools, for instance a chuck. The invention is more particularly directed to such a machine spindle or machine tool holder which is formed with a clamping device which gives a better precision of the worked object than what has so far been possible to provide with previously known machine tools.

At rotary working of material, like at milling, lathing, drilling, threading, reaming, grinding etc. of different materials there has since long time been used spindles or multi spindle working machines having rotary spindles in which chucks can be mounted. The working tools or the work pieces are clamped in said chucks, either by being clamped by outwardly movable clamping means, but generally by being clamped by inwardly movable clamping means.

The chucks in said known apparatus generally have been formed with a conical shaft having, at the end thereof, a clamping means, namely the actual clamping chuck in which the tools or the work pieces are being clamped. The conical shaft of the chuck is mounted in the rotary spindle of the machine tool by being pressed into an inner conical end recess of the machine spindle.

The clamping means of the tools can be of mechanical type having several metal elements which are in common screwed towards the centre, or eventually radially out from the centre, and which thereby clamp the tool or the work piece to the chuck.

These known clamping means normally give an acceptable working precision, but is some cases there may be a wish for a still better working precision. This has been made possible in that, in the latest years, chucks have been develloped which are formed as a hydraulic clamping device in the form of a double walled sleeve comprising an inner and/or outer thin wall or sleeve and an annular recess inside said sleeve between said walls, which recess is filled with a plastic or hydraulic pressure medium which, when being pressurized, brings the said thin wall or sleeve to expand radially inwards (or outwards) thereby centering and clamp connecting the tool or the work piece in the chuck. Correctly formed such hydraulic clamp devices or hydraulic chucks give a very accurate radial rotary precision of the clamped tool or work piece. An accurate radial rotary precision makes it possible to more rationally use the machine and the tools, for instance by making use of a higher feeding speeds, and to get a higher precision and a better quality of the worked surfaces.

However, also when using chucks having a hydraulic clamping device said described method of joining the conical shaft of the chuck with the conical recess of the machine spindle can sometimes give an imperfect radial precision, so called radial run-out of the tool which is clamped in the chuck. Depending on the fact that the clamping device necessarily is mounted at the end of the chuck cone, and that the chuck cone must have a certain axial length for being steadily mounted in the machine spindle the distance from the clamped tool and the bearings of the machine spindle may be relatively large, and this impairs the working precision and unfavourably stresses the bearings of the machine spindle, thereby perhaps causing wear of said bearings.

Attempts have been made to solve the last mentioned problem by screw or bolt connecting the clamping device directly to the machine spindle but also such arrangements involve precision faults in the connection or in the joint between the clamping device and the machine spindle. Further, the screw connection between the clamping device and the machine spindle also occupies a relatively large space, and the clamping device may be unnecessarily large and heavy.

The object of the invention therefore has been to solve the problem of providing a arrangement of a rotary machine spindle and a chuck, which arrangement gives an extraordinarily high precision as concerns the radial rotary play of the chuck and a high precision and a high quality of the worked product, in which the clamping device is located relatively close to the bearings of the machine spindle, in which it has been possible to make the clamping device with a small size and a light weight, and in which there is made use of the above mentioned hydraulic clamping device which gives an excellent centering and at the same time a strong clamping of the tools in the chuck.

The invention is based in the idea of forming the clamping device primarily or secondarily as an integral piece of the machine spindle itself or as a split spindle. This might eventually be made in that the machine spindle and the clamping device, already from beginning, be made as a homogenous, integral piece of material, but a machine spindle having a chuck thus formed by an integral piece of material should be very complicated and expensive to manufacture.

According to the invention the clamping device is, instead, formed as separate unit, and this separately manufactured clamping device is, on a suitable occation in the manufacturing process, welded to the machine spindle or machine spindle part. It is thereby not possible to manufacture the clamping device with especially high precision. On the contrary the desired high precision as concerns the radial play etc. is provided for after the clamping device has been welded or soldered to the machine spindle or machine spindle part, and this is made in that the machine spindle and the clamping device are finally worked at this stage, so that the machine spindle and the clamping device become very accuratately concentric. Since the machine spindle and the clamping device provide, after the joining thereof, an integral unit the final working of the bearing supports of the spindle and the clamping bore for the tools of the clamping device can be made with very high precision and accuracy as concerns the radial play of the tool clamping means of the chuck, and thereby also of the clamped working tool.

It is important that the welding or soldering, during the connecting of the clamping device to the machine spindle is made such that previously made heat treatments are not destroyed, or so that the hydraulic medium or any part of the clamping device is not damaged. The joining method has to allow the use of different materials of the machine spindle and the clamping device. Therefore the welding or soldering must be made with a minimum of heat. The joining can be made with certain modern welding methods like electron beam welding or laser welding, whereby the welding can be made without adding and transmitting any great amounts of heat to the machine spindle and the chuck.

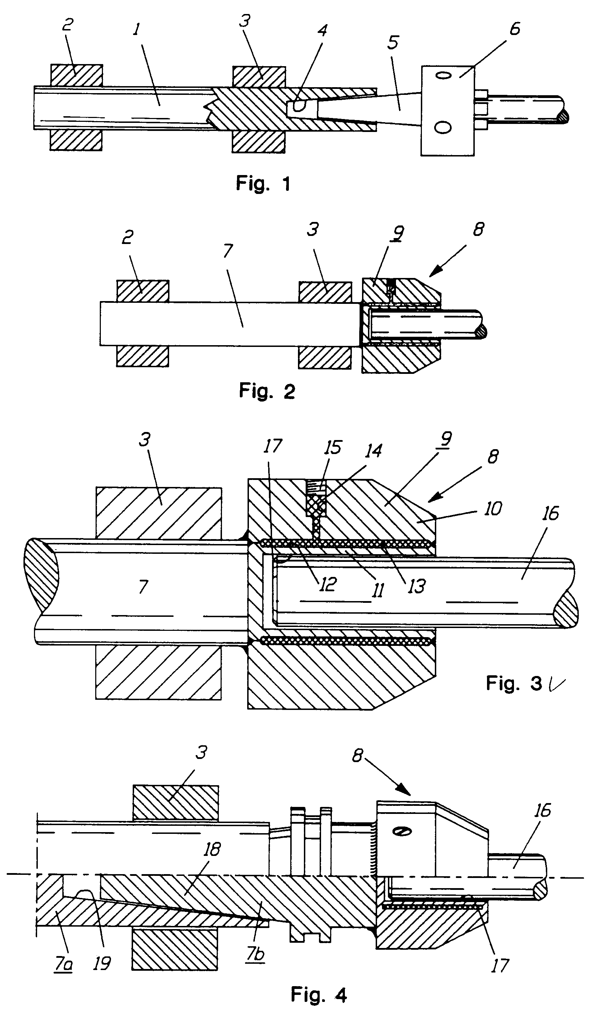

Now the invention is to be describd more in detail with reference to the accompanying drawings, in which figure 1 diagrammatically shows a machine spindle with a tool chuck according to a prior art system, whereas figure 2 shows an apparatus according to the invention. Figure 3 is an enlarged view of the apparatus of figure 2. Figure 4 is an alternative embodiment of the apparatus of figures 2 and 3.

The conventional tool connection arrangement shown in figure 1 comprises a machine spindle 1, which is beared in two bearings 2 and 3, and which at the outer end thereof has a conical bore 4. The tool chuck comprises a conical shaft 5 on which a clamping device, that is the actual clamping chuck 6, is mounted. The chuck is arranged to be screw or weld connected to the conical shaft, and it is arranged to be introduced, with the conical shaft 5 thereof, into and to be secured in the conical bore 4 of the machine spindle 1. It is obvious that there may be problems depending on imperfect radial rotary precision of the chuck, and it is also obvious that the clamping chuck may be located relatively far from the closest machine spindle bearing 3 and that the spindle bearings consequently are being relatively strongly loaded.

The arrangement according to the invention, which is shown in figures 2 and 3, comprises a machine spindle 7 which is integral with a clamping device 8 of the hydraulic clamp bushing.This clamp bushing basically is of a type which is known per se and which comprises a housing 9 having a solid outer housing portion 10 and an inner housing portion which is in the form of a thin sleeve or wall 11. In a space between the housing portions 10 and 11 there is an annular chamber 12 containing a hydraulic pressure medium 13, preferably a plastic pressure medium. The annular chamber 12 communicates hydraulically with a radial pressure chamber 14 containing the same type of pressure medium as in the annular chamber 12. The pressure chamber 14 is internally threaded and receives, in the threads thereof, a pressure screw 15 which upon pulling the screw pressurizes the pressure medium, whereby said pressure medium brings the inner wall 11 to become pressed radially inwards thereby both centering and clamping the tool shaft 16.

The clamp bushing 8 is made as a separate unit which is thereafter weld or solder connected to an even end surface of the machine spindle 7.

The machine spindle with the clamp chuck is made as follows:

A machine spindle 7 is made separately rather roughly and without any special demands on the precision thereof, and a clamp bushing 8 is likewise made separately and without any special demands on the precision thereof. The machine spindle 7 and the clamp bushing 8 can be made of different materials, and either of or both parts can be hardened or otherwise heat treated. The clamp bushing 8 is welded to the end surface of the machine spindle 7 by a welding or soldering method providing and transmitting as little amount of heat as possible, for instance electron beam welding or laser welding. The welding is made with so little amount of heat that the hardening or the heat treatment of the spindle 7 or the clamp bushing 8 is not injuriously effected, and also so that the hydraulic medium 13 in the clamp bushing 8 is not damaged. After the parts 7 and 8 have been weld or solder connected to form an integral unit, said unit is finally worked in that the bearing areas of the machine spindle 7 are being lathed and ground, and the clamp bore for the tools 16 is shaped to very great accuracy as concerns the radial rotary precision of the tool holder of the chuck and thereby of the clamped working tool. The machine spindle 7 with the tool chuck 8 now can be mounted in its bearings 2 and 3.

The tools 16 are mounted in that the shaft of the tool is introduced in the clamp bore of the clamp bushing 8, whereupon the pressure screw 15 is pulled, whereby the pressure medium 13 in the pressure chamber 12 is pressurized and the thin inner walls 11 of the clamp bushing are being expanded radially inwardly. At the first stage of the pressurization the tool 16 is being centered, and at the following stage of the clamping the tool is safely clamped in centered position in the clamp bushing.

The apparatus shown in figure 4 basically is of the same type as that of figures 2 and 3, and the only difference is that the machine spindle is split into two parts, the stationary or primary machine spindle part 7a and the secondary or releasable machine spindle part 7b. The advantage thereof is that the chuck with the clamp bushing, upon need, can be substituted, for instance to a chuck having another tool shaft bore 18. The machine spindle 7b with the clamp bushing 8 is made exactly as described above, and the conical shaft 18 of the secondary mackine spindle part 7b is just pressed into the conical bore 19 of the primary machine spindle part 7a.

| REFERENCE NUMERALS | | | |
|---|---|---|---|
| Prior Art | | New Technique | |
| 1 | machine spindle | 2 | machine bearing |
| 2 | machine bearing | 3 | machine bearing |
| 3 | machine bearing | 7 | machine bearing |
| 4 | concial bore (of 1) | 8 | clamp bushing |
| 5 | conical chuck shaft | 9 | chuck housing |
| 6 | clamp chuck | 10 | outer housing portion |
| | | 11 | thin wall, sleeve |
| | | 12 | annular chamber |
| | | 13 | Hydraulic medium |
| | | 14 | pressure chamber |
| | | 15 | pressure screw |
| | | 16 | tool shaft |
| | | 17 | tool shaft bore |
| | | 18 | conical end (of 7b) |
| | | 19 | conical bore (of 7a) |

## Claims

1. Rotatable holder for tools and work pieces, in the form of a machine spindle (7; 7a, 7b) for machine tools and having a clamping device (8) for tools or work pieces, for instance a chuck, in the form of a hydraulic clamp bushing (8) of the type known per se and which comprises a thin inner sleeve or inner wall (11), a solid outer body sleeve (10) and a plastic or hydraulic pressure medium (13) trapped in an annular pressure chamber (12) between said inner and outer sleeves (11, 12), and the inner sleeve (11) thereof being designed for being capable of, at pressurization of the hydraulic pressure medium (13), both centering and fixedly clamping a rotary tool (16) or work piece, **characterized** in that the machine spindle (7; 7a, 7b) and the clamp bushing (8) are formed as an integral unit, and the clamp bushing is connected to the machine spindle (7) by a weld or solder joint, and in that both the machine spindle part (7) and the hydraulic clamp bushing part (8) have been finally worked after said parts (7, 8) have been weld or solder connected so that the machine spindle (7) and the clamping bore of the clamp bushing (8) have an accurate radial/rotary precision, and in which the machine spindle (7; 7b) and the clamp bushing (8) have been joined by a welding or soldering method issuing and transmitting a minimum of heat, for instance electron beam welding or soldering or laser welding or soldering.

2. Rotatable holder according to claim 1, **characterized** in that the machine spindle is split into two parts (7a, 7b), namely a first part (7a) which is stationary in the working machine and a second part (7b) which is integral with clamp bushing (8) and which parts (7a, 7b) intimately connectable with great accuracy.

3. Method of manufacturing a rotatable holder for tools or work pieces according to claim 1 or 2 and comprising a machine spindle (7; 7a, 7b) for machine tools having a clamping device in the form of a hydraulic clamp bushing (8) for tools or work pieces, for instance a chuck of the type which is formed with a thin inner sleeve or inner wall (11), a solid outer sleeve (10) and a plastic or hydraulic pressure medium (12) trapped between said sleeves (11, 10), and in which the inner sleeve (11) is arranged, at pressurization of the hydraulic pressure medium, to both center and clamp connecting a rotary tool (16) or a work piece, **characterized** in that a rotatable machine spindle (7; 7a, 7b) is manufactured separately without any demands on accurate dimensions, in that a hydraulic clamp bushing (8) is manufactured separately, likewise without any demands of accurate dimensions, in that the clamp bushing (8) is thereafter weld connected or solder connected to the machine spindle (7; 7b) to form an integral unit therewith, and in that the bearing areas of the machine spindle (7; 7b), and the clamping bore (17) of the clamp bushing (8) are finally worked after said weld or solder connection to obtain accurate dimensions and a high radial rotary precision.

4. Method according to claim 3, **characterized** in that the machine spindle (7; 7b) and the clamp bushing (8) are connected to each other by a weld or solder method transmitting a minimum of heat, so that the various parts of the tool holder are not damaged do not become damaged during the heat treatment, or so that the hydraulic pressure medium (13) of the hydraulic clamp bushing is also not damaged.

5. Method according to claim 4, **characterized** in that the machine spindle (7; 7b) and the clamp bushing (8) are connected to each other by means of electronic beam welding or soldering, or by means of laser welding or laser soldering.

## Patentansprüche

1. Drehbarer Halter für Werkzeuge und Werkstücke in Form einer Maschinenspindel (7; 7a, 7b) für Werkzeugmaschinen, mit einer Spannvorrichtung (8) für Werkzeuge oder Werkstücke, beispielsweise einem Futter in Form einer hydraulischen Spannbuchse (8) an sich bekannter Art, die eine dünne Innenhülse oder Innenwand (11), eine massive äußere Gehäusehülse (10) und ein verformbares oder hydraulisches Druckmedium (13) aufweist, das in einer ringförmigen Druckkammer (12) zwischen den Innen- und Außenhülsen (11, 12) eingeschlossen ist, wobei deren Innenhülse (11) derart ausgebildet ist, daß sie bei Druckbeaufschlagung des hydraulischen Druckmediums (13) ein drehbares Werkzeug (16) oder Werkstück sowohl zentrieren als auch fest einspannen kann,
**dadurch gekennzeichnet**,
daß die Maschinenspindel (7; 7a, 7b) und die Spannbuchse (8) als eine integrale Einheit ausgebildet sind und die Spannbuchse an der Maschinenspindel (7) durch eine Schweiß- oder Lötverbindung befestigt ist, und daß sowohl der Maschinenspindelteil (7) als auch der hydraulische Spannbuchsenteil (8) endbearbeitet worden sind, nachdem die Teile (7, 8) zusammengeschweißt oder -gelötet worden sind, so daß die Maschinenspindel (7) und die Spannbohrung der Spannbuchse (8) eine hohe Radial-/Drehgenauigkeit aufweisen, wobei die Maschinenspindel (7; 7b) und die Spannbuchse (8) durch ein Schweiß- oder Lötverfahren miteinander verbunden worden sind, das ein Minimum an Wärme abgibt und überträgt, beispielsweise Elektronenstrahlschweißen oder -löten oder Laserstrahlschweißen oder -löten.

2. Drehbarer Halter nach Anspruch 1, dadurch gekennzeichnet, daß die Maschinenspindel in zwei Teile (7a, 7b) geteilt ist, nämlich in einen ersten Teil (7a), der ortsfest in der Bearbeitungsmaschine angeordnet ist, und einen zweiten Teil (7b), der einteilig mit der Spannbuchse (8) ausgeführt ist, wobei die Teile (7a, 7b) eng und mit hoher Genauigkeit miteinander verbindbar sind.

3. Verfahren zum Herstellen eines drehbaren Halters für Werkzeuge oder Werkstücke nach Anspruch 1 oder 2, wobei der Halter eine Maschinenspindel (7; 7a, 7b) für Werkzeugmaschinen aufweist, die mit einer Spannvorrichtung in Form einer hydraulischen Spannbuchse (8) für Werkzeuge oder Werkstücke versehen ist, beispielsweise mit einem Futter, das eine dünne Innenhülse oder Innenwand (11), eine massive Außenhülse (10) und ein verformbares oder hydraulisches, zwischen den Hülsen (11, 10) eingeschlossenes Druckmedium (13) aufweist, wobei die Innenhülse (11) so angeordnet ist, daß sie bei Druckbeaufschlagung des hydraulischen Druckmediums ein drehbares Werkzeug (16) oder ein Werkstück sowohl zentriert als auch fest einspannt, dadurch gekennzeichnet, daR eine drehbare Maschinenspindel (7; 7a, 7b) gesondert und ohne jegliche Anforderungen an genaue Abmaße gefertigt wird, daß eine hydraulische Spannbuchse (8) gesondert und ebenfalls ohne jegliche Anforderungen an genaue Abmaße hergestellt wird, daß die Spannbuchse (8) danach durch Schweißen oder Löten mit der Maschinenspindel (7; 7b) verbunden wird, um mit dieser eine integrale Einheit zu bilden, und daß die Lagerflächen der Maschinenspindel (7; 7b) sowie die Spannbohrung (17) der Spannbuchse (8) nach der Schweiß- oder Lötverbindung endbearbeitet werden, um genaue Abmaße und eine hohe radiale Drehgenauigkeit zu erhalten.

4. Verfahren nach Anspruch 3, dadurch gekennzeichnet, daß die Maschinenspindel (7; 7b) und die Spannbuchse (8) durch ein Schweiß- oder Lötverfahren miteinander verbunden werden, das ein Minimum an Wärme überträgt, so daß die verschiedenen Teile des Werkzeughalters während der Wärmebehandlung nicht beschädigt werden und auch das hydraulische Druckmedium (13) der hydraulischen Spannbuchse nicht beschädigt wird.

5. Verfahren nach Anspruch 4, dadurch gekennzeichnet, daß die Maschinenspindel (7; 7b) und die Spannbuchse (8) durch Elektronenstrahlschweißen oder -löten oder durch Laserstrahlschweißen oder -löten miteinander verbunden werden.

## Revendications

1. Support pour outils et pièces à usiner, mobile en rotation, sous forme d'une broche de machine (7 ; 7a, 7b) pour des machines-outils et comportant un dispositif de serrage (8) pour des outils ou des pièces à usiner, par exemple un mandrin, sous forme d'une bague de serrage hydraulique (8) du type connu par lui-même et qui comprend une gaine intérieure ou paroi intérieure mince (11), une gaine de corps extérieure solide (10) et un milieu de pression plastique ou hydraulique (13) piégé dans une chambre de pression annulaire (12) entre lesdites gaines intérieure et extérieure (11, 10) et la gaine intérieure (11) de celles-ci étant conçue pour être capable, sur la mise sous pression du milieu de pression hydraulique (13), à la fois de centrer et de serrer de façon fixe un outil rotatif (16) ou une pièce à usiner, caractérisé en ce que ; la broche de machine (7 ; 7a, 7b) et la bague de serrage hydraulique (8) sont réalisées comme une unité, d'une seule pièce, et la bague de serrage est raccordée à la broche de machine (7) par un joint soudé ou brasé, et en ce que, à la fois, l'élément broche de machine (7) et l'élément bague de serrage hydraulique (8) ont été, en dernier lieu, usinés après que lesdits éléments (7, 8) ont été raccordés par soudage ou brasage, de sorte que la broche de machine (7) et l'alésage de la bague de serrage ont une précision radiale/rotative exacte, et dans lequel la broche de machine (7 ; 7b) et la bague de serrage (8) ont été réunies par un procédé de soudage ou de brasage émettant et transmettant un minimum de chaleur, par exemple un soudage ou un brasage par faisceau électronique ou un soudage ou un brasage au laser.

2. Support mobile en rotation selon la revendication 1, caractérisé en ce que la broche de machine est fendue en deux éléments (7a, 7b), à savoir un premier élément (7a) qui est fixe dans la machine-outil, et un second élément (7b) qui est d'une seule pièce avec la bague de serrage (8), et lesquels éléments (7a, 7b) pouvant être raccordées intimement avec grande précision.

3. Procédé pour fabriquer un support pour outils et pièces à usiner, mobile en rotation, selon la revendication 1 ou la revendication 2, et comprenant une broche de machine (7 ; 7a, 7b) pour des machines-outils comportant un dispositif de serrage sous forme d'une bague de serrage (8) hydraulique pour des outils ou des pièces à usiner, par exemple, un mandrin, du type qui est réalisé avec une gaine intérieure ou paroi intérieure mince (11), une gaine extérieure solide (10) et un milieu de pression plastique ou hydraulique (13) piégé entre lesdites gaines intérieure et extérieure (11, 10) et dans lequel la gaine intérieure (11) est agencée, sur la mise sous pression du milieu de pression hydraulique, pour, à la fois, centrer et raccorder par serrage à la fois un outil rotatif (16) ou une pièce à usiner, caractérisé en ce qu'une broche de machine (7 ; 7a, 7b) est fabriquée séparément sans demander de dimensions précises, en ce qu'une bague de serrage hydraulique (8) est fabriquée séparément. de même sans demander de dimensions précises, en ce que la bague de serrage (8) est, par la suite, raccordée par soudage ou raccordée par brasage à la broche de machine (7 ; 7b) pour former avec celle-ci une unité d'une seule pièce et en ce que les surfaces de portée de la broche de machine (7 ; 7b), et de l'alésage de serrage (17) de la bague de serrage (8) sont, en dernier lieu, usinées, après ledit raccordement par soudage ou brasage, pour obtenir des dimensions précises et une précision radiale en rotation élevée.

4. Procédé selon la revendication 3, caractérisé en ce que la broche de machine (7 ; 7b) et la bague de serrage (8) sont raccordées l'une à l'autre par un procédé de soudage ou de brasage transmettant un minimum de chaleur, de sorte que les différents éléments du support d'outil ne sont pas endommagés pendant le traitement thermique, ou de sorte que le milieu de pression hydraulique (13) de la bague de serrage hydraulique n'est pas non plus endommagé.

5. Procédé selon la revendication 4, caractérisé en ce que la broche de machine (7 ; 7b) et la bague de serrage (8) sont raccordées l'une à l'autre au moyen de soudage ou de brasage par faisceau électronique ou au moyen de soudage au laser ou de brasage au laser.
